# EUROPEAN PATENT SPECIFICATION

(11) **EP 0 762 565 B1**
(45) Date of publication and mention of the grant of the patent: **19.11.2003**
(21) Application number: 96114010.0
(22) Date of filing: 02.09.1996
(51) Int. Cl.: H01S 1/02

(54) **Solid state device for generating electromagnetic wave in terahertz-band**
Festkörpervorrichtung zur Erzeugung elektromagnetischer Terahertzwellen
Dispositif à l'état solide pour la génération d'onde électromagnétique dans la bande terahertz

(30) Priority: 04.09.1995 JP 22638795
(43) Date of publication of application: 12.03.1997
(73) Proprietor: HIROSHIMA UNIVERSITY, Hiroshima City Hiroshima Pref. (JP)
(72) Inventor: Yamanishi, Masamichi, Hiroshima City, Hiroshima Pref. (JP); Kadoya, Yutaka, Higashihiroshima City, Hiroshima Pref. (JP)
(74) Representative: von Hellfeld, Axel, Dr. Dipl.-Phys.

(56) References cited:
- C. WEISBUCH ET AL: "Observation of the coupled exciton-photon mode splitting in a semiconductor quantum microcavity" PHYSICAL REVIEW LETTERS., vol. 69, no. 23, 7 December 1992, NEW YORK US, pages 3314-3317, XP002046379
- MARIE. S.C. LUO ET AL: "Generation of terahertz electromagnetic pulses from quantum well structures" IEEE JOURNAL OF QUANTUM ELECTRONICS., vol. 30, no. 6, June 1994, NEW YORK US, pages 1478-1488, XP000461378
- NUSS M C ET AL: "TERAHERTZ ELECTROMAGNETIC RADIATION FROM QUANTUM WELLS" APPLIED PHYSICS B: LASERS AND OPTICS, vol. B58, no. 3, 1 March 1994, pages 249-259, XP000443049
- Y. KADOYA ET AL: "Oscillator strength dependence of cavity-polariton mode splitting in semiconductor microcavities" APPLIED PHYSICS LETTERS., vol. 68, no. 3, 15 January 1996, NEW YORK US, pages 281-283, XP002046380
- D.S. CITRIN ET AL: "Coherent control of terahertz generation in a DC biased semiconductor microcavity" IEEE JOURNAL OF SELECTED TOPICS IN QUANTUM ELECTRONICS., vol. 2, no. 3, September 1996, VICE CENTER US, pages 720-723, XP002046381

## Description

### Background of the Invention

### Field of the Invention

The present invention relates to a solid state device for generating an electromagnetic wave in an extremely high frequency band, particularly in a terahertz-band.

### Related Art Statement

For generating an electromagnetic wave in a terahertz-band, that is, in approximately 10¹² Hz band, there have been proposed several types of solid state devices. In one known solid state device, a transient electric current is excited by irradiating a surface of a compound semiconductor with a pulsed intense light wave having a duration of femtosecond order, that is, approximately 10-15 second order. In another known solid state device, an oscillation is excited between respective states of heavy holes and light holes or between respective states having mutually different inherent energy values of plural semiconductor quantum wells by irradiating the semiconductor quantum wells with a pulsed intense light wave, an electric field being applied to said quantum wells.

However, among those conventionally proposed devices, for instance, in the former in which the transient current is excited, a spectrum of a generated electromagnetic wave is liable to be broadened, so that it is difficult to obtain a monochromatic electromagnetic wave. Moreover, in all of those conventionally proposed devices, a substantial part of a power of the irradiated pulsed light wave is transmitted through a semiconductor surface region or the quantum well region, so that it is difficult to realize a solid state device which can efficiently generate an electromagnetic wave having a high intensity.

### Summary of the Invention

An object of the present invention is to remove the above-mentioned difficulties of the known devices and to provide a novel and useful solid state device which can efficiently generate a monochromatic terahertz-band electromagnetic wave having an extremely high intensity.

For attaining the above object, a solid state device for generating an electromagnetic wave in a terahertz-band according to the present invention comprises the features of claim 1.

In a preferable embodiment of the solid state device according to the invention, said exciton generating region and said first and second reflecting means are formed on a compound semiconductor single-crystal substrate, said first reflecting means comprises a first distributed Bragg reflector, which is formed by a multilayer of alternate stack of a plurality of first compound semiconductor layers and a plurality of second compound semiconductor layers, said first and second semiconductor layers being made of compound semiconductor materials having one conductivity type and different refractive indices from each other, and said second reflecting means comprises a second distributed Bragg reflector, which is formed by a multilayer of alternate stack of a plurality of third compound semiconductor layers and a plurality of fourth compound semiconductor layers, said third and fourth semiconductor layers being made of compound semiconductor materials having the other conductivity type and different refractive indices from each other. In this case, there is produced a spontaneous electric field by these semiconductor layers having opposite conductivity types, and thus said electric flied applying means has to be constructed by considering the spontaneous electric field. For instance, the electric field applying means may be advantageously formed by a variable DC voltage supply source. In this case, the variable DC voltage supply source can be adjusted such that a net electric field applied across the exciton generating region becomes optimum.

In the solid state device according to the invention, the first and second reflecting means and exciton generating region constitute a resonator for the externally impinging pulsed light wave as well as for the internally generated light wave, and therefore the excitons are efficiently created and annihilated periodically in time. When the excitons and light wave are confined within a space formed in the resonator, the excitons are generated by the light wave and then the excitons are annihilated. During this annihilation process, a light wave having a substantially identical wavelength with that of the externally impinging light wave is generated and excitons are again generated by the thus emitted light wave. An exciton is composed of an electron and a hole, and thus under a condition that the electron and hole are polarized by the electric field, when an exciton density is changed periodically, an electromagnetic wave is emitted. The periodical change in the exciton density occurs spontaneously due to a formation of the polariton state. It should be noted that a spatial separation of an electron and a hole by an application of an electric field perpendicular to a semiconductor quantum well is known and is described in Japanese magazine, "PARITY", separate column, No. 08, 1991, pp. 72-82 entitled "APPLICATION OF SEMICONDUCTOR QUANTUM WELL TO PHYSICS AND OPTICAL DEVICE".

According to the invention, only a single pulsed light wave may be projected. However, due to a leakage of the light wave from the resonator and a possible phase deviation of the excitons, the light wave is gradually decayed. Therefore, in order to generate the electromagnetic wave for a relatively long time, it is necessary to project the coherent external pulsed light wave periodically in synchronism with the phase of the excitons.

Moreover, in the solid state device according to the invention, it is preferable to provide the exciton generating region, i.e. the quantum well, at an anti-node point of the standing wave of the light wave between the first and second reflectors. Then, the excitons are strongly coupled with the light wave, and thus it is possible to generate the electromagnetic wave having an extremely high intensity.

### Brief Description of the Drawing

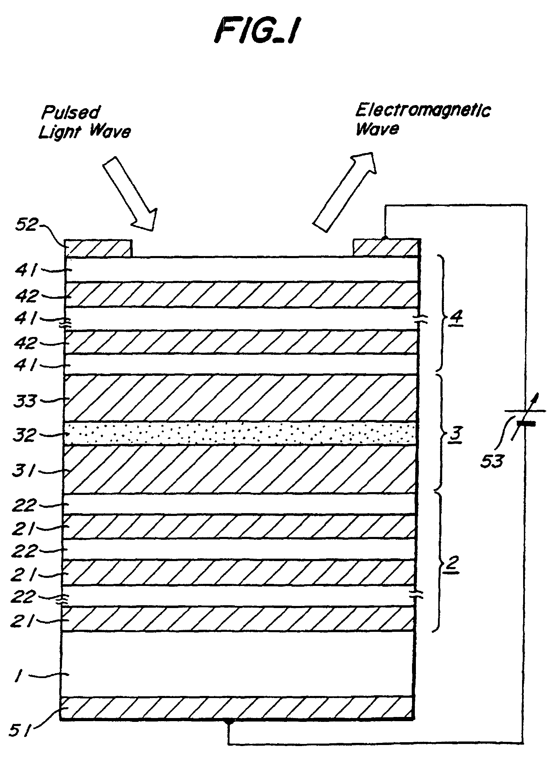

For the better understanding of the invention, reference is made to the accompanying drawing, in which Fig. 1 is a diagrammatic cross sectional view showing an embodiment of the solid state device for generating a terahertz-band electromagnetic wave according to the present invention.

In the accompanying drawing, a reference numeral 1 denotes a compound semiconductor single crystal substrate, 2 a first distributed Bragg reflector, 3 an exciton generating region, 4 a second distributed Bragg reflector, 21 and 22 first and second compound semiconductor layers respectively, 41 and 42 third and fourth compound semiconductor layers respectively, 31 and 33 barrier layers respectively, and a reference numeral 32 represents a quantum well layer.

### Description of the Preferred Embodiments

Now a preferred embodiment of the present invention will be described by referring to the accompanying drawing hereinafter.

Fig. 1 shows an embodiment of the solid state device for generating an electromagnetic wave in a terahertz-band according to the present invention. In this exemplified structure, on a compound semiconductor single crystal substrate 1 made of, for instance GaAs, there are successively stacked a first distributed Bragg reflector 2 consisting of alternately stacked first compound semiconductor layers 21 made of AlAs and second compound semiconductor layers 22 made of AlₓGa₍₁₋ₓ₎As, an exciton generating region 3 consisting of successively stacked barrier layer 31 made of AlAs, quantum well layer 32 made of GaAs and barrier layer 33 made of AlAs, and further a second distributed Bragg reflector 4 consisting of alternately stacked third compound semiconductor layers 41 made of AlₓGa₍₁₋ₓ₎As and fourth compound semiconductor layers 42 made of AlAs. In a concrete example of this structure, it is preferable to select a suffix x to approximate 0.2 for AlₓGa₍₁₋ₓ₎As.

The compound semiconductor layers forming the first and second distributed Bragg reflectors 2 and 4 are doped with impurities of different conductivity types, respectively. That is to say, the compound semiconductor layers 21 and 22 of the first reflector 2 are of one conductivity type, e.g. p-type, and the compound semiconductor layers 41 and 42 of the second reflector 4 are of the other conductivity type, e.g. n-type. Then a spontaneous DC electric field is produced across the exciton generating region 3. In this manner in the present embodiment, the thus generated spontaneous DC electric field is applied to the exciton generating region 3. It should be noted that in general, this spontaneous DC electric field could not provide an electric field strength by means of which an electron and a hole of an exciton are spatially separated from each other in an effective manner. Therefore, in the present embodiment, there is provided an electric field applying means. As shown in Fig. 1, the electric field applying means comprises a first electrode 51 formed on the rear surface of the substrate 1, a second electrode 52 provided on an outer surface of the second distributed Bragg reflector 4, and a variable DC voltage supply source 53 connected between the first and second electrodes. It should be noted that since the substrate 1 is made of the single-crystal compound semiconductor body of one conductivity type, the first electrode 51 can be provided on the rear surface of the substrate 1. Further, in order to prevent the second electrode 52 from inhibiting the incident of the externally impinging pulsed light wave as well as an emission of the electromagnetic wave, the second electrode is formed as a frame having a center opening. By adjusting the variable DC voltage supply source 53, it is possible to apply an optimum electric field across the exciton generating region 3. In this case, a polarity of the voltage supply source 53 may be opposite to that of the spontaneous electric field. It should be noted that in order to generate an electromagnetic wave efficiently, a wavelength of the internally generated light wave should be made equal to that of the externally impinging light wave. However, in practice, a wavelength of the internally generated light wave might fluctuated due to various factors. On the other hand, a wavelength of the internally generated light wave is changed depending upon a strength of a static electric field applied across the exciton generating region. Therefore, by adjusting the variable DC voltage supply source 53, it is possible to bring a wavelength of the internally generated light wave into identical with that of the externally impinging light wave, and therefore the electromagnetic wave can be generated efficiently.

According to the invention, the first distributed Bragg reflector 2 is formed by stacking alternately a plurality of first semiconductor layers and a plurality of second semiconductor layers, said first and second semiconductor layers having different refractive indices from each other. Similarly, the second distributed Bragg reflector 4 is formed by stacking alternately a plurality of third semiconductor layers and a plurality of fourth semiconductor layers, said third and fourth semiconductor layers having different refractive indices from each other. In the present embodiment, the first and second semiconductor layers are of one conductivity type and the third and fourth semiconductor layers are of the other conductivity type. Further, the first and fourth semiconductor layers are made of the same material and the second and third semiconductor layers are also made of the same material. Then, the device can be manufactured easily and economically.

The aforesaid externally projected pulsed light wave and internally generated light wave are effectively reflected between the first and second reflectors 2 and 4. Therefore, the light wave is efficiently absorbed between the first and the second distributed Bragg reflectors, the excitons are generated efficiently within the exciton generating region situated therebetween, and a strong interaction occurs between the internally generated light wave and the excitons. The more differs the refractive indices between alternately stacked semiconductor layers of two types, the more are raised the efficiency of the reflection effected therebetween. However, in the case that the difference of refraction indices is not so large, it is required to stack a relatively large number of semiconductor layers. In the present embodiment, the first and fourth compound semiconductor layers are made of AlAs and the second and third compound semiconductor layers are made of Al_{0.2}Ga_{0.8}As, which have refractive indices of 2.98 and 3.45, respectively. A difference in a refractive index between these semiconductor layers is not so large, and therefore in each reflector, a relatively large number of semiconductor layers such as twenty layers are alternately stacked. It should be noted that according to the present invention, it is not always necessary to form the first and second distributed Bragg reflectors 2 and 4 to have identical structure.

According to the invention, the first and second distributed Bragg reflectors 2, 4 and the exciton generating region 3 situated therebetween constitute a resonator having a resonance wave length λ. Then, it is preferable to set the thickness of each layers of AlAs and AlₓGa₍₁₋ₓ₎As in the distributed Bragg reflectors to λ/4 and to set a resonator length including the barrier layers of AlAs and the quantum well layer of GaAs to λ/2.

In the solid state device for generating a terahertz-band electromagnetic wave according to the present invention, the pulsed light wave of high intensity is made incident upon the device from the side of the second distributed Bragg reflector 4, and then the terahertz-band electromagnetic wave having a high intensity can be generated from the second distributed Bragg reflector. In this case, the external pulsed light wave is preferably made incident upon the second reflector at a relatively large incident angle such as about 60 degrees as shown by an arrow in Fig. 1. Then, an electromagnetic wave having a highest intensity is emitted in a direction which satisfies a reflection law with respect to the externally impinging pulsed light wave. That is to say, the electromagnetic wave having the highest intensity is emitted from the second reflector at an exit angle of about 60 degrees as illustrated in Fig. 1 by an arrow.

In this case, the light wave having a wave length identical with the resonant wave length of the resonator formed by the distributed Bragg reflectors and semiconductor layers situated therebetween, is subjected to a multiple scattering in the resonator, as a result of which a standing wave is formed. This standing wave strongly interacts with the excitons in a coherent manner, said excitons being excited in the GaAs quantum well layer situated at a center of the resonator layers.

When the exciton and light wave are strongly coupled with each other, the exciton and light wave could not be remained in respective original physical states, but are translated into a new physical state called polariton. In the situation in which the polariton state has been formed, the energy is periodically exchanged between the exciton and the light wave in such a manner that their phases are maintained unchanged. The period of this energy exchange has a specific value which is determined by the strength of the coupling, that is, the interaction between the exciton and the light wave, and the excitons are created and annihilated repeatedly at a frequency corresponding to said period. For example, it have been experimentally clarified that said frequency is approximately one terahertz in the above exemplified structure.

In general, it is not so easy to create and annihilate the exciton periodically at an extremely high frequency, particularly at a frequency of terahertz-band. However, in the so-called polariton state, the periodical creation and annihilation of the exciton at the extremely high frequency can be facilitated, because the creation and the annihilation of the exciton are a spontaneous phenomenon accompanied with the strong interaction between the exciton and the light wave.

On the other hand, it is a well known fact that, when a dipole formed by positive and negative electric charges which are spatially separated from each other is periodically oscillated, an electromagnetic wave is generated from this oscillating dipole. In the solid state device according to the invention, in order to separate spatially electron and hole of the exciton to form a dipole, the electric field is applied to the exciton generating region. In the above embodiment, the distributed Bragg reflectors provided on respective sides of the exciton generating region sides are doped with N-type and P-type dopants, respectively, so that a spontaneous DC electric field is applied to the quantum well. In addition, it is possible to control this internally applied electric field by providing control electrodes on outermost semiconductor layers of the first and second reflectors, said control electrodes being connected to a suitable DC bias voltage supply source.

As mentioned above, in the above embodiment, the spatial symmetry of the excitons is broken by the electric field applied across the exciton generating region, so that electron and hole of an exciton are spatially separated. Accordingly, when an intense pulsed light wave having the same wavelength as that of the internally generated light wave is made incident upon the device to excite excitons which repeat the creation and annihilation periodically in time, an electromagnetic wave is generated from the device.

In the solid state device for generating an electromagnetic wave of a terahertz-band according to the present invention, the light wave is confined within the resonator, so that the light wave is subjected to the strong interaction with the excitons generated in the quantum well. The period of the energy exchange between the exciton and the light wave due to said strong interaction has a specific value which is determined by the strength of the interaction between the exciton and the light wave. Therefore, a dipole formed by spatially separated electron and hole of an exciton is oscillated at said period to generate an electromagnetic wave. Therefore, the electromagnetic wave originated by this phenomenon presents an extremely excellent monochromaticity. On the other hand, the resonator of the solid device according to the invention serves to cause a strong interaction between the light wave confined therein and the exciton and to produce a standing wave of the externally impinging pulsed light wave and hence to excite efficiently the exciton in the quantum well layer situated at or near an anti-node point of the standing wave. This efficient excitation of the exciton facilitates the generation of the strong terahertz-band electromagnetic wave.

## Claims

1. A solid state device for generating an electromagnetic wave of a terahertz-band comprising:
an exciton generating region (3) for generating excitons which are excited by irradiation of an externally impinging pulsed light wave having a duration of femtosecond order and are created and annihilated periodically in time to generate an internally generated light wave having a wave length substantially identical with a wave length of said externally impinging pulsed light wave,
a first reflector means (2) arranged on one side of said exciton generating region for reflecting said externally impinging pulsed light wave and internally generated light wave;
a second reflecting means (4) arranged on the other side of said exciton generating region for reflecting said externally impinging pulsed light wave as well as said internally generated light wave, said second reflecting means constituting a resonator forming a standing wave of said externally impinging pulsed light wave and internally generated light wave together with said first reflecting means and exciton generating region;
said excitons being strongly coupled with the externally impinging pulsed light wave as well as said internally generated light wave by a quantum well (32) at an anti-node point of a standing wave of the light between the first and second reflecting means (2, 4) to generate a polariton state;
a substrate (1) having a surface on which said first reflecting means (2), exciton generating means (3) and second reflecting means (4) are successively stacked in this order; and
an electric field applying means (51, 52, 53) for applying an electric field for spatially separating an electron and a hole constituting said exciton generated in said exciton generating region (3).

2. A solid state device as claimed in claim 1, wherein said substrate is formed by a compound semiconductor single-crystal substrate, said first reflecting means comprises a first distributed Bragg reflector, which is formed by a multilayer of alternate stack of a plurality of first compound semiconductor layers and a plurality of second compound semiconductor layers, said first and second semiconductor layers having different refractive indices from each other, and said second reflecting means comprises a second distributed Bragg reflector, which is formed by a multilayer of alternate stack of a plurality of third compound semiconductor layers and a plurality of fourth compound semiconductor layers, said third and fourth semiconductor layers having different refractive indices from each other.

3. A solid state device as claimed in claim 2, wherein said first and second compound semiconductor layers of the first reflector are made of compound semiconductor materials having one conductivity type, and said third and fourth compound semiconductor layers of the second reflector are made of compound semiconductor materials having the other conductivity type, whereby a spontaneous DC electric field is applied across said exciton generating region.

4. A solid state device as claimed in claim 2 or 3, wherein said compound semiconductor single crystal substrate, said first and fourth compound semiconductor layers and said second and third compound semiconductor layers are made of GaAs, AlAs and AlₓGa₍₁₋ₓ₎As, respectively.

5. A solid state device as claimed in claim 4, wherein said second and third compound semiconductor layers are made of Al_{0.2}Ga_{0.8}As.

6. A solid state device as claimed in claim 2, wherein said exciton generating region is formed in a single or multiple quantum well structure formed of a quantum well layer and barrier layers arranged on respective sides of said quantum well layer.

7. A solid state device as claimed in 6, wherein, said quantum well layer and said barrier layers are made of GaAs and AlAs, respectively.

8. A solid state device as claimed in claim 2, wherein a resonant wavelength of a resonator formed by said first and said second distributed Bragg reflectors and said exciton generating region is set at λ, a thickness of said first, second, third and fourth compound semiconductor layers is set to λ/4, respectively, and a thickness of the resonator is set to λ/2.

9. A solid state device as claimed in claim 3, wherein said electric field applying means comprises a first electrode provided on one side of said exciton generating region, a second electrode provided on the other side of the exciton generating region, and a DC voltage supply source connected across said first and second electrodes.

10. A solid stated device as claimed in claim 9, wherein said first electrode is arranged on a rear surface of said compound semiconductor single-crystal substrate having the same conductivity type as that of the first and second compound semiconductor layers of the first distributed Bragg reflector, and said second electrode is arranged on an outer surface of said second distributed Bragg reflector and has an opening formed therein, through said opening the externally impinging light wave is made incident upon said second distributed Bragg reflector and said electromagnetic wave emitted from the second distributed Bragg reflector.

11. A solid state device as claimed in claim 9 or 10, wherein said DC voltage supply source comprises a variable DC voltage supply source.

## Patentansprüche

1. Festkörpervorrichtung zum Erzeugen einer elektromagnetischen Welle eines Terahertzbandes mit:
einer Exzitonen erzeugenden Zone (3) zum Erzeugen von Exzitonen, die durch die Bestrahlung mit einer extern auftreffenden gepulsten Lichtwelle einer Dauer im Femtosekundenbereich angeregt und zeitperiodisch erzeugt und vernichtet werden, um eine intern erzeugte Lichtwelle mit einer im Wesentlichen der Wellenlänge der extern auftreffenden gepulsten Lichtwelle identischen Wellenlänge zu erzeugen,
einer ersten Reflektoreinrichtung (2), die an einer Seite der Exzitonen erzeugenden Zone angeordnet ist, um die extern auftreffende gepulste Lichtwelle und die intern erzeugte Lichtwelle zu reflektieren;
einer zweiten Reflektoreinrichtung (4), die an der anderen Seite der Exzitonen erzeugenden Zone angeordnet ist, um die extern auftreffende gepulste Lichtwelle sowie die intern erzeugte Lichtwelle zu reflektieren, wobei die zweite Reflektoreinrichtung einen Resonator darstellt, der zusammen mit der ersten Reflektoreinrichtung und der Exzitonen erzeugenden Zone eine stehende Welle der extern auftreffenden gepulsten und der intern erzeugten Lichtwelle bildet;
wobei die Exzitonen stark mit der extern auftreffenden gepulsten Lichtwelle sowie der intern erzeugten Lichtwelle durch einen Quantentopf (32) an einem Bauch einer stehenden Welle des Lichtes zwischen der ersten und der zweiten Reflektoreinrichtung (2, 4) gekoppelt sind, um einen Polaritonzustand herzustellen;
einem Substrat (1) mit einer Oberfläche, auf der die erste Reflektoreinrichtung (1), die Exzitonen erzeugende Einrichtung (3) und die zweite Reflektoreinrichtung (4) nacheinander in dieser Reihenfolge gestapelt sind; und
einer Einrichtung (51, 52, 53) zum Anlegen eines elektrischen Feldes, um ein elektrisches Feld zur räumlichen Trennung eines Elektrons und eines Lochs, die das in der Exzitonen erzeugenden Zone (3) erzeugte Exziton bilden, anzulegen.

2. Festkörpervorrichtung nach Anspruch 1, bei der das Substrat aus einem Verbund-Halbleiter-Einkristallsubstrat gebildet wird, wobei die erste Reflektoreinrichtung einen ersten verteilten Bragg-Reflektor aufweist, der aus einem mehrlagigen Stapel aus einer Mehrzahl erster Verbund-Halbleiterschichten alternierend mit einer Mehrzahl zweiter Verbund-Halbleiterschichten gebildet wird, wobei die ersten und zweiten Halbleiterschichten voneinander verschiedene Brechungsindices haben, und die zweite Reflektoreinrichtung einen zweiten verteilten Bragg-Reflektor aufweist, der aus einem mehrlagigen Stapel aus einer Mehrzahl dritter Verbund-Halbleiterschichten alternierend mit einer Mehrzahl vierter Verbund-Halbleiterschichten gebildet wird, wobei die dritten und vierten Halbleiterschichten voneinander verschiedene Brechungsindices haben.

3. Festkörpervorrichtung nach Anspruch 2, bei der die ersten und zweiten Verbund-Halbleiterschichten des ersten Reflektors aus Verbund-Halbleitermaterialien mit einem Leitfähigkeitstyp und die dritten und vierten Verbund-Halbleiterschichten aus Verbund-Halbleitermaterialien mit einem anderen Leitfähigkeitstyp bestehen, wodurch ein spontanes elektrisches Gleichstromfeld an die Exzitonen erzeugende Zone gelegt wird.

4. Festkörpervorrichtung nach Anspruch 2 oder 3, bei der das Verbund-Halbleiter-Einkristallsubstrat, die ersten und vierten Verbund-Halbleiterschichten und die zweiten und dritten Verbund-Halbleiterschichten aus GaAs, AlAs bzw. AlₓGa₍₁₋ₓ₎As bestehen.

5. Festkörpervorrichtung nach Anspruch 4, bei der die zweiten und dritten Verbund-Halbleiterschichten aus Al_{0,2}Ga_{0,8}As bestehen.

6. Festkörpervorrichtung nach Anspruch 2, bei der die Exzitonen erzeugende Zone als eine einfache oder mehrfache Quantentopfstruktur aus einer Quantentopfschicht und an den jeweiliegen Seiten der Quantentopfschicht angeordneten Sperrschichten ausgeformt ist.

7. Festkörpervorrichtung nach Anspruch 6, bei der die Quantentopfschicht und die Sperrschichten aus GaAs bzw. AlAs bestehen.

8. Festkörpervorrichtung nach Anspruch 2, bei der die Resonanzwellenlänge eines vom ersten und zweiten verteilten Bragg-Reflektor und der Exzitonen erzeugenden Zone gebildeten Resonators mit λ, die Dicke der ersten, zweiten, dritten und vierten Verbund-Halbleiterschichten mit λ/4 und die Dicke des Resonators mit λ/2 eingestellt ist.

9. Festkörpervorrichtung nach Anspruch 3, bei der die Einrichtung zum Anlegen eines elektrischen Feldes eine an einer Seite der Exzitonen erzeugenden Zone angeordnete erste Elektrode, eine an der anderen Seite der Exzitonen erzeugenden Zone angeordnete zweite Elektrode und eine über die erste und zweite Elektrode geschaltete Gleichspannungs-Versorgungsquelle aufweist.

10. Festkörpervorrichtung nach Anspruch 9, bei der die erste Elektrode auf der Rückseite des Verbund-Halbleiter-Einkristallsubstrats mit dem gleichen Leitfähigkeitstyp wie die ersten und zweiten Verbund-Halbleiterschichten des ersten verteilten Bragg-Reflektors und die zweite Elektrode an der Außenfläche des zweiten verteilten Bragg-Reflektors angeordnet ist und eine in ihr ausgeformte Öffnung hat, wobei die extern auftreffende Lichtwelle veranlasst wird, durch diese Öffnung auf den zweiten verteilten Bragg-Reflektor zu fallen und die elektromagnetische Welle vom zweiten verteilten Bragg-Reflektor daraus emittiert zu werden.

11. Festkörpervorrichtung nach Anspruch 9 oder 10, bei der die Gleichspannungs-Versorgungsquelle eine variable Gleichspannungs-Versorgungsquelle aufweist.

## Revendications

1. Dispositif du type état solide, permettant de produire une onde électromagnétique de la bande des térahertz (THz), comprenant :
une région (3) génératrice d'excitons servant à produire des excitons qui sont excités par l'envoi d'une onde lumineuse pulsée venant frapper extérieurement qui possède une durée de l'ordre de la femtoseconde (fs) et qui sont créés et annihilés périodiquement de façon à produire une onde lumineuse créée intérieurement qui possède une longueur d'onde sensiblement identique à la longueur d'onde de ladite onde lumineuse pulsée venant frapper extérieurement,
un premier moyen réfléchissant (2) disposé d'un côté de ladite région génératrice d'excitons afin de réfléchir ladite onde lumineuse pulsée venant frapper extérieurement et ladite onde lumineuse créée intérieurement ;
un deuxième moyen réfléchissant (4) disposé de l'autre côté de ladite région génératrice d'excitons afin de réfléchir ladite onde lumineuse pulsée venant frapper extérieurement aussi bien que ladite onde lumineuse créée intérieurement, ledit deuxième moyen réfléchissant constituant un résonateur qui forme une onde stationnaire de ladite onde lumineuse pulsée venant frapper extérieurement et de ladite onde lumineuse créée intérieurement en liaison avec ledit premier moyen réfléchissant et ladite région génératrice d'excitons ;
lesdits excitons étant fortement couplés avec l'onde lumineuse pulsée venant frapper extérieurement, aussi bien qu'avec ladite onde lumineuse créée intérieurement, par un puits quantique (32) situé en un point antinodal de l'onde stationnaire de la lumière entre les premier et deuxième moyens réfléchissants (2, 4) afin de produire un état de polariton ;
un substrat (1) possédant une surface sur laquelle ledit premier moyen réfléchissant (2), ledit moyen générateur d'excitons (3) et ledit deuxième moyen réfléchissant (4) sont empilés successivement dans cet ordre ; et
un moyen (51, 52, 53) d'application de champ électrique servant à appliquer un champ électrique destiné à séparer spatialement l'électron et le trou qui constituent ledit exciton créé dans ladite région génératrice d'excitons (3).

2. Dispositif du type état solide selon la revendication 1, où ledit substrat est formé par un substrat monocristallin semiconducteur composé, ledit premier moyen réfléchissant comprend un premier réflecteur de Bragg réparti, lequel est formé par une multicouche d'empilement alterné d'une pluralité de couches de premier semiconducteur composé et d'une pluralité de couches de deuxième semiconducteur composé, lesdites couches de premier et deuxième semiconducteurs ayant des indices de réfraction mutuellement différents, et ledit deuxième moyen réfléchissant comprend un deuxième réflecteur de Bragg réparti, lequel est formé d'une multicouche d'empilement alterné d'une pluralité de couches de troisième semiconducteur composé et d'une pluralité de couches de quatrième semiconducteur composé, lesdites couches des troisième et quatrième semiconducteurs ayant des indices de réfraction mutuellement différents.

3. Dispositif du type état solide selon la revendication 2, où lesdites couches de premier et deuxième semiconducteurs composés du premier réflecteur sont faites de matériaux semiconducteurs composés ayant un premier type de conductivité, et lesdites couches des troisième et quatrième semiconducteurs composés du deuxième réflecteur sont faites de matériaux semiconducteurs composés ayant l'autre type de conductivité, si bien qu'un champ électrique continu spontané est appliqué sur l'étendue de ladite région génératrice d'excitons.

4. Dispositif du type état solide selon la revendication 2 ou 3, où ledit substrat monocristallin de semiconducteur composé, lesdites couches de premier et quatrième semiconducteurs composés et lesdites couches de deuxième et troisième semiconducteurs composés sont respectivement faits de GaAs, AlAs et AlₓGa₍₁₋ₓ₎As.

5. Dispositif du type état solide selon la revendication 4, où lesdites couches de deuxième et troisième semiconducteurs composés sont faites de Al_{0,2}Ga_{0,8}As.

6. Dispositif du type état solide selon la revendication 2, où ladite région génératrice d'excitons est formée dans une structure de puits quantique unique ou de puits quantiques multiples, laquelle est formée d'une couche de puits quantique et de couches de barrières disposées sur les côtés respectifs de ladite couche de puits quantique.

7. Dispositif du type état solide selon la revendication 6, où ladite couche de puits quantique et lesdites couches de barrière sont respectivement faites de GaAs et AlAs.

8. Dispositif du type état solide selon la revendication 2, où la longueur d'onde de résonance du résonateur formé par lesdits premier et deuxième réflecteurs de Bragg répartis et ladite région génératrice d'excitons est fixée à λ, l'épaisseur desdites couches de premier, deuxième, troisième et quatrième semiconducteurs composés est fixée à λ/4, respectivement, et l'épaisseur du résonateur est fixée à λ/2.

9. Dispositif du type état solide selon la revendication 3, où ledit moyen d'application de champ électrique comprend une première électrode placée d'un premier côté de ladite région génératrice d'excitons, une deuxième électrode placée de l'autre côté de la région génératrice d'excitons, et une source d'alimentation électrique en tension continue qui est connectée entre lesdites première et deuxième électrodes.

10. Dispositif du type état solide selon la revendication 9, où ladite première électrode est disposée sur la surface arrière dudit substrat monocristallin de semiconducteur composé ayant le même type de conductivité que les couches de premier et deuxième semiconducteurs composés du premier réflecteur de Bragg réparti, et ladite deuxième électrode est disposée sur une surface externe dudit deuxième réflecteur de Bragg réparti et possède une ouverture qui y est formée, l'onde lumineuse venant frapper extérieurement, via ladite ouverture, est amenée à tomber sur ledit deuxième réflecteur de Bragg réparti et ladite onde électromagnétique émise depuis le deuxième réflecteur de Bragg réparti.

11. Dispositif du type état solide selon la revendication 9 ou 10, où ladite source d'alimentation électrique en tension continue comprend une source d'alimentation électrique en tension continue variable.
